# EUROPEAN PATENT APPLICATION

(11) **EP 4 498 508 A1**
(43) Date of publication of application: **29.01.2025**
(21) Application number: 23858811.5
(22) Date of filing: 15.06.2023
(51) Int. Cl.: H01M 50/586, H01M 50/593

(54) **BATTERY AND ELECTRONIC DEVICE**

(30) Priority: 02.09.2022 CN 202222336435 U
(71) Applicant: Zhuhai CosMX Battery Co., Ltd., Zhuhai, Guangdong 519180 (CN)
(72) Inventor: WEI, Zhida, Zhuhai, Guangdong 519180 (CN); WANG, Zhifeng, Zhuhai, Guangdong 519180 (CN); XIE, Jichun, Zhuhai, Guangdong 519180 (CN); LI, Xilong, Zhuhai, Guangdong 519180 (CN)
(74) Representative: Elzaburu S.L.P.
(86) International application number: PCT/CN2023/100541
(87) International publication number: WO 2024/045772

(57) **Abstract**

The present application relates to the field of battery technologies, and provides a battery and an electronic device, so as to solve the problem that the battery structures in the related art cannot relatively well ensure safety performance of batteries. The battery includes a housing, a battery cell module, a first connecting member, a second connecting member and an insulating separating member. The electrical properties of the first connecting member and the second connecting member are opposite. In a first direction of the housing, at least a part of the separating member is located between the first connecting member and the second connecting member. The present application can effectively ensure the insulation effect between the first connecting member and the second connecting member, such that the risk of short circuits caused by the contact between the first connecting member and the second connecting member is avoided, thus better ensuring the safety performance of the battery, further improving battery quality, and extending the service life of the battery.

## Description

The present application claims priority to Chinese Patent Application No. 202222336435.6, which was filed with China National Intellectual Property Administration on September 2, 2022 and entitled "Battery and Electronic Device". The disclosure of the above patent application is incorporated herein by reference in its entirety.

### TECHNICAL FIELD

The present application relates to the field of battery technologies and, in particular, to a battery and an electronic device.

### BACKGROUND

Batteries have the advantages of light weight, high safety, and high energy density, etc., so they have become the first choice for most electronic devices. The electronic device includes a device body, in which a battery is assembled. The battery is electrically connected with the device body and provides an energy source for the device body.

During use, the safety performance of the battery is very important. The battery includes a housing and a battery cell module assembled in the housing, a positive electrode connecting sheet and a negative electrode connecting sheet. The positive electrode connecting sheet is welded to a positive tab of the battery cell module. The negative electrode connecting sheet is welded on a negative tab of the battery cell module.

However, the above-mentioned battery structure cannot ensure the safety performance of the battery.

### SUMMARY

In order to solve the problems mentioned in the background, embodiments of the present application provide a battery and an electronic device that can effectively ensure the insulation effect between the first connecting member and the second connecting member, thereby preventing the risk of short circuits caused by the contact between the first connecting member and the second connecting member, thus better ensuring the safety performance of the battery, further improving battery quality, and extending the service life of the battery.

In order to achieve the above object, in a first aspect, an embodiment of the present application provides a battery, including a housing, a battery cell module, a first connecting member, a second connecting member and an insulating separating member;
where the housing has a cavity, all of the battery cell module, the first connecting member, the second connecting member and the separating member are located in the cavity, and the first connecting member and the second connecting member are of opposite charge;
along a first direction of the housing, at least a part of the separating member is located between the first connecting member and the second connecting member.

In the above-mentioned battery, optionally, a projection of the battery cell module along a second direction of the housing at least partially overlaps a projection of the separating member along the second direction of the housing.

In the above-mentioned battery, optionally, the separating member includes a separating member body, a first separating portion and a second separating portion; along a width extending direction of the battery cell module, the first separating portion and the second separating portion are connected to opposite ends of the separating member body, and the separating member body is located between the first connecting member and the second connecting member; at least a part of the first connecting member is located on a surface of a side of the first separating portion away from the battery cell module, and at least a part of the second connecting member is located on a surface of a side of the second separating portion away from the battery cell module.

In the above-mentioned battery, optionally, the battery cell module includes a battery cell body, a first tab and a second tab; the first tab and the second tab are connected to different portions of the battery cell body and are located on a surface of a same side of the battery cell body close to the separating member, and the first tab and the second tab are of opposite charge; a surface of a side of the separating member body close to the battery cell module is attached to the battery cell body, and a surface of a side of the first separating portion close to the battery cell module is attached to a portion of the first tab, and a surface of a side of the second separating portion close to the battery cell module is attached to a portion of the second tab.

In the above-mentioned battery, optionally, the first connecting member includes a first connecting portion and a first assembly portion, and the second connecting member includes a second connecting portion and a second assembly portion; the first connecting portion is located on the surface of the side of the first separating portion away from the battery cell module, and the second connecting portion is located on the surface of the side of the second separating portion away from the battery cell module; the first assembly portion is attached to another portion of the first tab, and the second assembly portion is attached to another portion of the second tab.

In the above-mentioned battery, optionally, a first conductive member and a second conductive member are also included; both the first conductive member and the second conductive member are disposed in the cavity, the first conductive member is located on a side of the first connecting member away from the separating member, and the second conductive member is located on a side of the second connecting member away from the separating member; the first conductive member is connected with a surface of a side of the first connecting portion away from the battery cell module, and the second conductive member is connected with a surface of a side of the second connecting portion away from the battery cell module.

In the above-mentioned battery, optionally, the first connecting portion is provided with a first extending portion, and the second connecting portion is provided with a second extending portion; an extending direction of the first extending portion is a direction toward the first conductive member, an extending direction of the second extending portion is a direction toward the second conductive member, and the extending direction of the first extending portion and the extending direction of the second extending portion are the same; the first conductive member is connected with the first connecting portion through the first extending portion, and the second conductive member is connected with the second connecting portion through the second extending portion.

In the above-mentioned battery, optionally, a first packaging member and a second packaging member are also included; both the first packaging member and the second packaging member are located outside the housing, and at least a part of the first packaging member passes through the housing and is connected with the first conductive member, and at least a part of the second packaging member passes through the housing and is connected with the second conductive member.

In the above-mentioned battery, optionally, the separating member body is provided with a first liquid injection hole through a thickness of the separating member body; the housing is provided with a second liquid injection hole, and the second liquid injection hole and the first liquid injection hole are arranged correspondingly and in communication with each other.

In the above-mentioned battery, optionally, a cover plate is also included, the cover plate covers the housing, and the cover plate and the housing jointly enclose the cavity.

In the above-mentioned battery, optionally, the separating member is connected with the first connecting member by bonding or welding; and/or the separating member is connected with the second connecting member by bonding or welding; and/or, the separating member is connected with the battery cell module by bonding or welding.

In the above-mentioned battery, optionally, the separating member is a rigid member.

In a second aspect, an embodiment of the present application also provides an electronic device, including a device body and the above-mentioned battery, where the device body has an accommodating cavity, and the battery is disposed in the accommodating cavity;
the battery is electrically connected with the device body.

In the battery and the electronic device provided by the present application, by including a housing having a cavity, in which all of a battery cell module, a first connecting member, a second connecting member and a separating member are located, the above-mentioned structures can be protected by the cavity; by including the separating member located between the first connecting member and the second connecting member, the insulation effect between the first connecting member and the second connecting member can be effectively ensured, which avoids the risk of short circuit caused by the contact between the first connecting member and the second connecting member, thereby better ensuring the safety performance of the battery, further improving the quality of the battery, and extending the service life of the battery.

In addition to the technical problems solved by the embodiments of the present application, the technical features constituting the technical solutions, and the beneficial effects brought by the technical features of these technical solutions described above, other technical problems that can be solved by the battery and the electronic device provided by the embodiments of the present application, other technical features included in the technical solutions, and the beneficial effects brought by these technical features will be further described in detail in the specific implementations.

### BRIEF DESCRIPTION OF DRAWINGS

In order to more clearly explain the technical solutions in the embodiments of the present application or in the prior art, the drawings needed to be used for describing the embodiments or the prior art will be briefly introduced below. Obviously, these drawings described in the following are some embodiments of the present application. For those of ordinary skill in the art, other drawings can be obtained based on these drawings without paying creative efforts.
FIG. 1 is a schematic structural diagram 1 of a battery provided by an embodiment of the present application.
FIG. 2 is a schematic structural diagram 2 of a battery provided by an embodiment of the present application.
FIG. 3 is an exploded schematic diagram of a battery provided by an embodiment of the present application.
FIG. 4 is a schematic structural diagram of a separating member provided by an embodiment of the present application.
FIG. 5 is a cross-sectional diagram of a battery provided by an embodiment of the present application.
FIG. 6 is a schematic diagram of partially enlarged part I in FIG. 5.

Description of reference numerals:
100-battery; 110-housing; 111-cavity; 112-second liquid injection hole; 120-battery cell module; 121-battery cell body; 122-first tab; 123-second tab; 130-first connecting member; 131-first connecting portion; 1311-first extending portion; 132-first assembly portion; 140-second connecting member; 141-second connecting portion; 1411-the second extending portion; 142-second assembly portion; 150-separating member; 151-separating member body; 1511-first liquid injection hole; 152-first separating portion; 153-second separating portion; 160-first conductive member; 170-second conductive member; 180-first packaging member; 190-second packaging member; 200-cover plate.

### DESCRIPTION OF EMBODIMENTS

Batteries have the advantages of light weight, high safety, and high energy density, so they have become the first choice for most electronic devices. The electronic device includes a device body, in which a battery is assembled. The battery is electrically connected with the device body and provides an energy source for the device body.

In the related art, the battery includes a housing, a battery cell module, a positive electrode connecting sheet, a negative electrode connecting sheet, a packaging sheet and a pole, etc. The battery cell module includes a battery cell, a positive tab and a negative tab, and the housing has a cavity, in which all of the battery cell module, the positive electrode connecting sheet, the negative electrode connecting sheet, the packaging sheet and the tabs are located. There is a liquid injection hole on the housing, and the electrolyte is injected into the cavity through the liquid injection hole.

During assembly, the positive and negative tabs are connected to the battery cell respectively, the positive electrode connecting sheet is welded to the positive tab, and the negative connecting sheet is welded to the negative tab. Generally, in order to avoid the risk of short circuit caused by the contact between the positive electrode connecting sheet and the negative connecting sheet, an insulating member is often provided between the positive electrode connecting sheet and the negative electrode connecting sheet for insulation, where in most cases, a diaphragm or an insulating glue is used as the insulating member.

However, when a diaphragm is used for insulation, since the diaphragm is relatively soft, during assembly, gaps are likely to exist between the diaphragm and the tabs, as well as between the diaphragm and the connecting sheet. When the connecting sheet and the tab are welded and abutted tightly, it is easy to lead to the risk of short circuit caused by the contact between the connecting sheet and the tab, as well as the contact between the positive electrode connecting sheet and the negative electrode connecting sheet. In addition, even if a short circuit does not occur during the welding process, there will be a large risk of short circuit of the battery when the battery vibrates.

When an insulating glue is used for insulation, since the insulating glue is relatively thin and weak in strength, when the connecting sheet and tab are welded and abutted tightly, it is easy for the tab or the connecting sheet to scratch the diaphragm, resulting in a risk of short circuit caused by the contact between the connecting sheet and the tab, as well as the contact between the positive electrode connecting sheet and the negative electrode connecting sheet.

Meanwhile, because the insulating glue is relatively soft, it is difficult to operate when pasting, which wastes manual labor and material resources and greatly reduces production efficiency. In addition, the gummed paper is thin and it is difficult for a liquid injection hole to be provided thereto, thereby hindering the liquid injection for the battery cell to a certain extent.

In order to solve the above technical problems, the present application provides a battery and an electronic device, by including a housing having a cavity, in which all of a battery cell module, a first connecting member, a second connecting member and a separating member are located, the above-mentioned structures can be protected by the cavity; by including the separating member located between the first connecting member and the second connecting member, the insulation effect between the first connecting member and the second connecting member can be effectively ensured, which avoids the risk of short circuit caused by the contact between the first connecting member and the second connecting member, thereby better ensuring the safety performance of the battery, further improving the quality of the battery, and extending the service life of the battery.

In order to make the object, technical solutions and advantages of the embodiments of the present application clearer, the technical solutions in the embodiments of the present application will be clearly and comprehensively described below with reference to the drawings in the embodiments of the present application. Obviously, the described embodiments are part of the embodiments of the present application, but not all of them. All other embodiments obtained by those of ordinary skill in the art based on the embodiments in the present application without creative efforts fall within the protection scope of the present application.

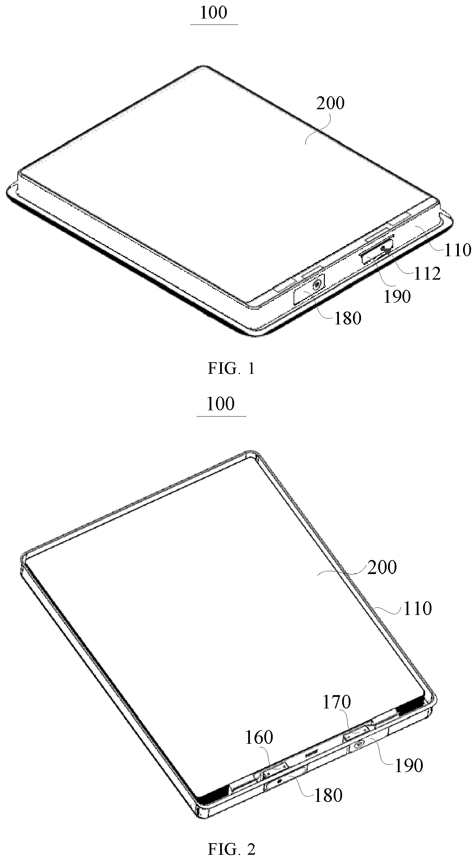

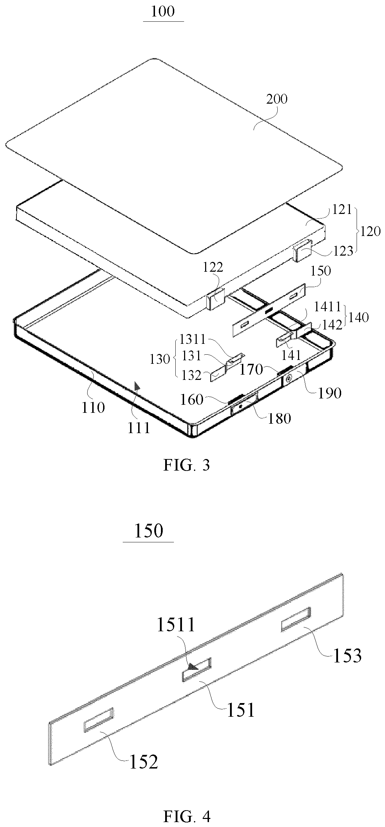

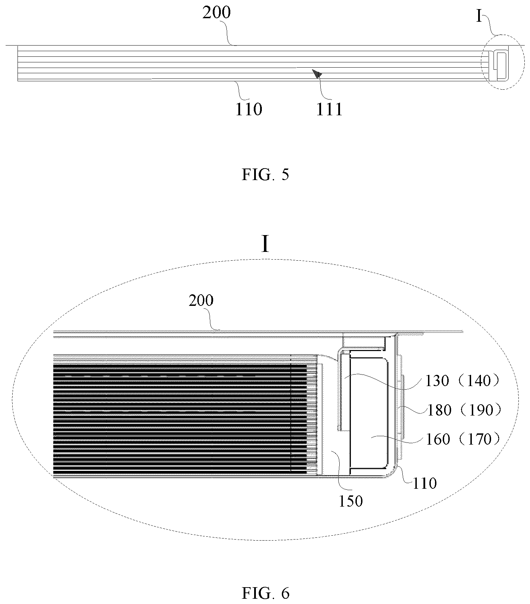

FIG. 1 is a schematic structural diagram 1 of a battery provided by an embodiment of the present application. FIG. 2 is a schematic structural diagram 2 of a battery provided by an embodiment of the present application. FIG. 3 is an exploded schematic diagram of a battery provided by an embodiment of the present application. FIG. 4 is a schematic structural diagram of a separating member provided by an embodiment of the present application. FIG. 5 is a cross-sectional diagram of a battery provided by an embodiment of the present application. FIG. 6 is a schematic diagram of partially enlarged part I in FIG. 5.

### Embodiment 1

Referring to FIG. 1 to FIG. 6, an embodiment of the present application provides a battery 100, including a housing 110, a battery cell module 120, a first connecting member 130, a second connecting member 140 and a separating member 150. The housing 110 has a cavity 111, in which all of the battery cell module 120, the first connecting member 130, the second connecting member 140 and the separating member 150 are located, so that the above-mentioned structures can be protected by the cavity 111.

The first connecting member 130 and the second connecting member 140 are of opposite charge. In the embodiment, the first connecting member 130 may be a positive electrode connecting member, and the second connecting member 140 may be a negative electrode connecting member; or, the first connecting member 130 may be a negative electrode connecting member, and the second connecting member 140 may be a positive electrode connecting member. In the embodiment, the description is given by taking the first connecting member 130 specifically being a positive electrode connecting member, and the second connecting member 140 specifically being a negative electrode connecting member as an example.

During assembly, as shown in FIG. 2 and FIG. 3, along a first direction of the housing 110, at least a part of the separating member 150 is located between the first connecting member 130 and the second connecting member 140. Besides, a projection of the battery cell module 120 along a second direction of the housing 110 at least partially overlaps a projection of the separating member 150 along the second direction of the housing 110.

It should be noted that in the embodiment, the first direction is a width extending direction of the housing 110, and the second direction is a length extending direction of the housing 110. That is, after the assembly is completed, along the width extending direction of the housing 110 direction, at least a part of the separating member 150 is located between the first connecting member 130 and the second connecting member 140, and along the length extending direction of the housing 110, the separating member 150 is located between an inner wall surface of the housing 110 and the battery cell module 120.

The separating member 150 in the embodiment is an insulating member, which can effectively avoids the risk of short circuit caused by the contact between the first connecting member 130 and the second connecting member 140, as well as the contact between the battery cell module 120 and the first connecting member 130 or the second connecting member 140, thereby ensuring the insulation effect between the first connecting member 130 and the second connecting member 140, as well as between the battery cell module 120 and the connecting members, thereby improving the safety performance of the battery, further improving the quality of the battery and extending the service life of the battery.

The material of the separating member 150 is not further limited. For example, the separating member 150 can be made of non-metallic materials. The separating member 150 can be a plastic member, or the separating member 150 can also be made of other materials with insulating properties.

In addition, in the embodiment, as shown in FIG. 3 and FIG. 4, the separating member 150 can be of a plate-shaped structure, which is easy to be assembled and provides high assembly stability; meanwhile, the separating member 150 can be made of rigid material, which refers to a material that deforms slightly under the action of external force. For example, cement, sand and gravel can be used as its raw materials, which are not further limited in the embodiment.

By preparing the separating member 150 using a rigid material, it is possible to avoid the risk of short circuit in the prior art caused by the contact between the connecting sheet and the tab, as well as the contact between the positive electrode connecting sheet and the negative electrode connecting sheet when a separating member or an insulating glue is used for insulation whose softness is easy to cause such contact.

Meanwhile, the separating member 150 made of rigid material has a certain thickness and higher strength, which is more convenient for providing a liquid injection hole, so that the electrolyte is not blocked, which is beneficial to a rapid passage of the electrolyte, thereby effectively solving the problem that the battery cell body 121 is less likely to be soaked when glue is applied for insulation and avoiding the problem that an external impact force adversely affects the battery cell module 120.

In a feasible implementation, further referring to FIG. 4, the separating member 150 includes a separating member body 151, a first separating portion 152 and a second separating portion 153. Along the width extending direction of the battery cell module 120, the separating portion 152 and the second separating portion 153 are connected to opposite ends of the separating member body 151, and the separating member body 151 is located between the first connecting member 130 and the second connecting member 140.

During assembly, at least a part of the first connecting member 130 is attached to a surface of a side of the first separating portion 152 away from the battery cell module 120, and at least a part of the second connecting member 140 is attached to a surface of a side of the second separating portion 153 away from the battery cell module 120.

It should be noted that the attachment in the embodiment only refers to an assembly relationship and does not have an electrical connection or other connection relationship. The separating member 150 and the first connecting member 130 may be connected by bonding or welding. The separating member 150 and the second connecting member 140 may be connected by bonding or welding.

The separating member 150 and the battery cell module 120 can be connected by bonding. Specifically, a surface of a side of the separating member 150 close to the battery cell module 120 can be coated with gum, so that the separating member 150 and the battery cell module 120 are firmly bonded together through the gum.

In the present embodiment, the assembly relationship between the above-mentioned structures includes but is not limited to the above-mentioned methods, and can be specifically set according to actual conditions.

In a feasible implementation, as shown in FIG. 3, the battery cell module 120 includes a battery cell body 121, a first tab 122 and a second tab 123, where the first tab 122 and the second tab 123 are connected to different portions of the battery cell body 121 and are located on the surface of the same side of the battery cell body 121 close to the separating member 150.

The first tab 122 and the second tab 123 are of opposite charge. In the embodiment, the first tab 122 may be a positive tab and the second tab 123 may be a negative tab. Alternatively, the first tab 122 may be a negative tab and the second tab 123 may be the positive tab. In the embodiment, the description is provided by taking the first tab 122 being the positive tab and the second tab 123 being the negative tab as an example. Meanwhile, the positive tab is opposed to the positive electrode connecting member, and the negative tab is opposed to the negative electrode connecting member.

The first tab 122 is connected to the positive electrode of the battery cell body 121, the second tab 123 is connected to the negative electrode of the battery cell body 121, a surface of a side of the separating member body 151 close to the battery cell module 120 is attached to the battery cell body 121, a surface of a side of the first separating portion 152 close to the battery cell module 120 is attached to a portion of the first tab 122, and a surface of a side of the second separating portion 153 close to the battery cell module 120 is attached to a portion of the second tab 123.

The surface of the side of the first separating portion 152 close to the battery cell module 120 and the first tab 122 can be connected by welding, and the surface of the side of the second separating portion 153 close to the battery cell module 120 and the second tab 123 can also be connected by welding.

The first tab 122 and the second tab 123 can be welded to the battery cell body 121 by welding, such as ultrasonic welding, laser welding, riveting welding, current energy storage welding, current welding or spot welding etc., or, the tabs can also be arranged on the battery cell body 121 in other ways, which is not further limited in the embodiment.

In a feasible implementation, as shown in FIG. 3, the first connecting member 130 may include a first connecting member 131 and a first assembly portion 132. The first connecting member 131 is attached to a surface of a side of the first separating portion 152 away from the battery cell module 120, and the first assembly portion 132 is attached to another portion of the first tab 122 to realize the connection between the first connecting member 130 and the separating member 150, as well as the connection between the first connecting member 130 and the first tab 122.

The second connecting member 140 may include a second connecting portion 141 and a second assembly portion 142. The second connecting portion 141 is attached to a surface of a side of the second separating portion 153 away from the battery cell module 120, and the second assembly portion 142 is attached to another portion of the second tab 123 to realize the connection between the second connecting member 140 and the separating member 150, as well as the connection between the second connecting member 140 and the second tab 123.

In a feasible implementation, as shown in FIG. 2, FIG. 3 and FIG. 6, a first conductive member 160 and a second conductive member 170 are also included. Both the first conductive member 160 and the second conductive member 170 are disposed in the cavity. The first conductive member 160 is located on a side of the first connecting member 130 away from the separating member 150, and the second conductive member 170 is located on a side of the second connecting member 140 away from the separating member 150.

During assembly, the first conductive member 160 is connected with a surface of a side of the first connecting portion 131 away from the battery cell module 120, and the second conductive member 170 is connected with a surface of a side of the second connecting portion 141 away from the battery cell module 120.

It should be noted that in the embodiment, the first conductive member 160 is a positive pole, the second conductive member 170 is a negative pole, the positive pole is opposed to the positive electrode connecting member, and the negative pole is opposed to the negative connecting member. By including the first conductive member 160 and the second conductive member 170, the electrical connection between the battery cell body 121 and the outside of the housing 110 is realized.

In a feasible implementation, as shown in FIG. 3, a first extending portion 1311 is provided on the first connecting portion 131, and a second extending portion 1411 is provided on the second connecting portion 141.

The extending direction of the first extending portion 1311 is a direction toward the first conductive member 160, the extending direction of the second extending portion 1411 is a direction toward the second conductive member 170, and the extending direction of the first extending portion 1311 and the extending direction of the second extending portion 1411 are the same.

During assembly, the first conductive member 160 is connected with the first connecting portion 131 through the first extending portion 1311, and the second conductive member 170 is connected with the second connecting portion 141 through the second extending portion 1411, thereby ensuring the contact connection between the first conductive member 160 and the first connecting portion 131, as well as the contact connection between the second conductive member 170 and the second connecting portion 141, and thus ensuring the assembly stability between the first conductive member 160 and the first connecting portion 131, as well as the assembly stability between the second conductive member 170 and the second connecting portion 141.

In a feasible implementation, as shown in FIG. 1 to FIG. 3, a first packaging member 180 and a second packaging member 190 are also included. Both the first packaging member 180 and the second packaging member 190 are located outside the housing 110.

During assembly, at least a part of the first packaging member 180 passes through the housing 110 and is connected with the first conductive member 160, and at least a part of the second packaging member 190 passes through the housing 110 and is connected with the second conductive member 170, thereby completing the packaging of battery 100. At the same time, the first packaging member 180 and the second packaging member 190 have a large packaging area during packaging, thereby ensuring better sealing and reliability of the battery 100.

In a feasible implementation, as shown in FIG. 4, the separating member body 151 is provided with a first liquid injection hole 1511 that runs through a thickness of the separating member body 151; the housing 110 is provided with a second liquid injection hole 112 (specifically referring to FIG. 1), and the second liquid injection hole 112 and the first liquid injection hole 1511 are provided correspondingly and in communication with each other.

By providing the first liquid injection hole 1511 and the second liquid injection hole 112, the electrolyte is injected into the cavity 111 sequentially through the second liquid injection hole 112 and the first liquid injection hole to ensure the electrical connection between the positive tab and the negative tab of the battery 100.

The first packaging member 180 and the second packaging member 190 are packaged on the second injection hole 112 of the housing 110 to realize the packaging of the battery 100. The first packaging member 180 and the second packaging member 190 are mainly packaged at the edge of the second liquid injection hole 112 by welding.

In a feasible implementation, as shown in FIG. 3, FIG. 5 and FIG. 6, a cover plate 200 is also included. The cover plate 200 covers the housing 110, and the cover plate 200 and the housing 110 together enclose the cavity 111. By including the cover 200, the battery cell module 120, the first connecting member 130, the second connecting member 140 and the separating member 150 can be further protected.

### Embodiment 2

Based on the above-mentioned Embodiment 1, an embodiment of the present application further provides an electronic device, including a device body and the above-mentioned battery 100. The device body has an accommodating cavity, and the battery 100 is disposed in the accommodating cavity. The battery 100 is electrically connected with the device body and can provide electric energy to the device body.

It should be noted that the device body in the embodiment may be a housing of the device. In addition, the electronic device may be a wearable electronic device, such as a watch, a mobile phone, a sports bracelet, etc.; or the electronic device may be other electronic products; or other electronic devices in which the battery 100 is applied.

Other technical features are the same as those in Embodiment 1 and can achieve the same technical effects, which will not be repeated herein.

In the battery 100 and the electronic device provided by the present application, by including a housing 110 which has a cavity 111, and all of the battery cell module 120, the first and second connecting members 130 and 140 and the separating member 150 are located in the cavity 111, the cavity 111 can protect the above-mentioned structure; by including the separating member 150 located the first connecting member 130 and the second connecting member 140, the insulation effect between the first connecting member 130 and the second connecting member 140 can be effectively ensured, so that the risk of short circuit caused by the contact between the first connecting member 130 and the second connecting member 140 can be avoided, thereby better ensuring the safety performance of the battery 100, further improving quality of the battery 100, and extending the service life of battery 100.

In the description of the present application, it should be understood that the orientations or positional relationships indicated by the terms "center", "length", "width", "thickness", "top", "bottom", "upper", "lower", "left", "right", "front", "rear", "vertical", "horizontal", "inner", "outer", "axial", "circumferential" etc. are based on the orientations or positional relationships shown in the drawings, which are only for the convenience of describing the present application and simplifying the description, and do not indicate or imply that the indicated positions or components must have a specific orientation, specific construction and operation, and therefore cannot be understood as a limitation of the present application.

In addition, the terms "first" and "second" are used for descriptive purposes only and cannot be understood as indicating or implying relative importance or implicitly indicating the quantity of indicated technical features. Therefore, features defined by "first" and "second" may explicitly or implicitly include one or more of these features. In the description of the present application, "a plurality of' means at least two, such as two, three, etc., unless otherwise expressly and specifically limited.

In the present application, unless otherwise clearly stated and limited, the terms "installing", "connecting", "connected with", "fixing", etc. should be understood in a broad sense, for example, it can be a fixed connection or a detachable connection, or an integrated connection; a mechanical connection, an electrical connection or a mutual communication; a direct connection, or an indirect connection through an intermediate medium, an internal connection between two elements or an interactive relationship between two elements. For those of ordinary skill in the art, the specific meanings of the above terms in the present application can be understood according to specific circumstances.

In the present application, unless otherwise explicitly stated and limited, a first feature being "above" or "below" a second feature may include a direct contact between the first and second features, or may also include an indirect contact between the first and second features through additional features therebetween. Furthermore, a first feature being "above", "over" and "on" a second feature includes the first feature being right above and diagonally above the second feature, or simply mean that the first feature is higher than the second feature at the height level. A first feature being "below", "under" and "beneath" a second feature includes the first feature being right below and diagonally below the second feature, or simply means that the first feature is lower than the second feature at the height level.

Finally, it should be noted that the above embodiments are only used to illustrate the technical solutions of the present application, but not to limit them; although the present application has been described in detail with reference to the foregoing embodiments, those of ordinary skill in the art should understand that: the technical solutions described in the foregoing embodiments can still be modified, or some or all of the technical features can be equivalently replaced; and these modifications or replacements do not cause the essence of the corresponding technical solutions to deviate from the scope of the technical solutions of the embodiments of the present application.

## Claims

1. A battery, comprising: a housing, a battery cell module, a first connecting member, a second connecting member and an insulating separating member;
wherein the housing has a cavity, all of the battery cell module, the first connecting member, the second connecting member and the separating member are located in the cavity, and the first connecting member and the second connecting member are of opposite charge;
along a first direction of the housing, at least a part of the separating member is located between the first connecting member and the second connecting member.

2. The battery according to claim 1, wherein a projection of the battery cell module along a second direction of the housing at least partially overlaps a projection of the separating member along the second direction of the housing.

3. The battery according to claim 2, wherein the separating member comprises a separating member body, a first separating portion and a second separating portion;
along a width extending direction of the battery cell module, the first separating portion and the second separating portion are connected to opposite ends of the separating member body, and the separating member body is located between the first connecting member and the second connecting member;
at least a part of the first connecting member is located on a surface of a side of the first separating portion away from the battery cell module, and at least a part of the second connecting member is located on a surface of a side of the second separating portion away from the battery cell module.

4. The battery according to claim 3, wherein the battery cell module comprises a battery cell body, a first tab and a second tab;
the first tab and the second tab are connected to different portions of the battery cell body and are located on a surface of a same side of the battery cell body close to the separating member, and the first tab and the second tab are of opposite charge;
a surface of a side of the separating member body close to the battery cell module is attached to the battery cell body, and a surface of a side of the first separating portion close to the battery cell module is attached to a portion of the first tab, and a surface of a side of the second separating portion close to the battery cell module is attached to a portion of the second tab.

5. The battery according to claim 4, wherein the first connecting member comprises a first connecting portion and a first assembly portion, and the second connecting member comprises a second connecting portion and a second assembly portion; the first connecting portion is located on the surface of the side of the first separating portion away from the battery cell module, and the second connecting portion is located on the surface of the side of the second separating portion away from the battery cell module;
the first assembly portion is attached to another portion of the first tab, and the second assembly portion is attached to another portion of the second tab.

6. The battery according to claim 5, further comprising a first conductive member and a second conductive member;
both the first conductive member and the second conductive member are disposed in the cavity, the first conductive member is located on a side of the first connecting member away from the separating member, and the second conductive member is located on a side of the second connecting member away from the separating member;
the first conductive member is connected with a surface of a side of the first connecting portion away from the battery cell module, and the second conductive member is connected with a surface of a side of the second connecting portion away from the battery cell module.

7. The battery according to claim 6, wherein the first connecting portion is provided with a first extending portion, and the second connecting portion is provided with a second extending portion;
an extending direction of the first extending portion is a direction toward the first conductive member, an extending direction of the second extending portion is a direction toward the second conductive member, and the extending direction of the first extending portion and the extending direction of the second extending direction are the same;
the first conductive member is connected with the first connecting portion through the first extending portion, and the second conductive member is connected with the second connecting portion through the second extending portion.

8. The battery according to claim 7, further comprising a first packaging member and a second packaging member;
both the first packaging member and the second packaging member are located outside the housing, at least a part of the first packaging member passes through the housing and is connected with the first conductive member, and at least a part of the second packaging member passes through the housing and is connected with the second conductive member.

9. The battery according to any one of claims 3 to 8, wherein the separating member body is provided with a first liquid injection hole through a thickness of the separating member body, and the housing is provided with a second liquid injection hole; and
the second liquid injection hole and the first liquid injection hole are arranged correspondingly and in communication with each other.

10. The battery according to any one of claims 1 to 8, further comprising a cover plate, wherein the cover plate covers the housing, and the cover plate and the housing jointly enclose the cavity.

11. The battery according to any one of claims 1 to 8, wherein the separating member is connected with the first connecting member by bonding or welding;
and/or, the separating member is connected with the second connecting member by bonding or welding;
and/or, the separating member is connected with the battery cell module by bonding or welding.

12. The battery according to any one of claims 1 to 8, wherein the separating member is a rigid member.

13. An electronic device, comprising a device body and the battery according to any one of claims 1 to 12, wherein the device body has an accommodating cavity, and the battery is arranged in the accommodating cavity;
the battery is electrically connected with the device body.
